(19) Europäisches Patentamt
European Patent Office
Office européen des brevets

(11) **EP 4 468 216 A1**

(12) **EUROPEAN PATENT APPLICATION**
published in accordance with Art. 153(4) EPC

(43) Date of publication:
**27.11.2024 Bulletin 2024/48**

(21) Application number: **22920666.9**

(22) Date of filing: **27.12.2022**

(51) International Patent Classification (IPC):
**G06N 99/00** (2019.01)  **G05B 13/02** (2006.01)
**G05B 13/04** (2006.01)

(52) Cooperative Patent Classification (CPC):
**G06N 5/01; G05B 13/02; G05B 13/04; G06N 99/00**

(86) International application number:
**PCT/JP2022/048436**

(87) International publication number:
**WO 2023/136150 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.01.2022 JP 2022004778**

(71) Applicant: **DENSO CORPORATION**
**Kariya-city, Aichi-pref. 448-8661 (JP)**

(72) Inventor: **HIROTSU Teppei**
**Kariya-city, Aichi-pref., 448-8661 (JP)**

(74) Representative: **Winter, Brandl - Partnerschaft
mbB
Alois-Steinecker-Straße 22
85354 Freising (DE)**

(54) **OPTIMAL SOLUTION CALCULATION DEVICE**

(57)    An object of the present disclosure is to provide an optimal solution calculation device for calculating an optimization problem in model predictive control.

An optimal solution calculation device (1) repeatedly calculates an optimal solution that minimizes an evaluation function having a time-varying parameter at regular intervals. The optimal solution calculation device includes: an initial solution generation unit (11) that generates an initial solution for providing an initial value for a search process to search for the optimal solution; and an optimal solution search unit (12) that calculates the optimal solution through the search process using the initial solution. The initial solution generation unit (11) generates the initial solution using a previous optimal solution calculated by the optimal solution search unit (12).

**FIG. 1**

1 : OPTIMAL SOLUTION CALCULATION DEVICE

**Description**

TECHNICAL FIELD

The present disclosure relates to an optimal solution calculation device for calculating an optimization problem in model predictive control.

CROSS REFERENCE TO RELATED APPLICATIONS

This application is based on and claims the benefits of priority of Japanese Patent Application No. 2022-004778 filed on January 17, 2022, the entire disclosure of which is incorporated herein by reference.

BACKGROUND ART

In recent years, a control method called model predictive control (i.e., MPC) has been attracting attention for controlling various control devices. By using the model predictive control, the performance of the control device can be improved.

The model predictive control is a control method that performs optimized control by solving a control input that minimizes an evaluation function indicating a control objective. The control input is an input value to a control target. There are various methods for solving the control input, including analytically solving the mathematical expression for the evaluation function, gradient methods, and search-based methods.

However, analytically solving the mathematical expression for the evaluation function has the difficulty that the control target is restricted, and the gradient method has the difficulty that the evaluation function is restricted since it may fall into a local solution.

As a search-based method, a technique for increasing speed by parallel processing of a plurality of processor elements for a plurality of solution candidates is known, as described in Non-Patent Literature 1 below.

PRIOR ART LITERATURES

NON-PATENT LITERATURE

[Non-patent literature 1]

Teppei Hirotsu and Atsushi Yokoyama, "Vehicle Motion Control Algorithm for Autonomous Driving in Urban Areas and Its Implementation on Embedded ECUs", Institute of Electronics, Information and Communication Engineers Techniques Volume 115, No. 518, p1-p5, Published March 24, 2016

SUMMARY OF INVENTION

The method of Non-Patent Literature 1 is advantageous in that the method solves the difficulty in the analytically solving of the evaluation function, the gradient methods and the like since the method of Non-Patent Literature 1 eliminates the restrictions on the evaluation function. On the other hand, in the search-based methods, when searching for a candidate solution, it is necessary to provide an initial solution, which is the initial value of the solution. However, since it is not known where the initial solution is, a random value within the range between the upper limit and the lower limit of the input value to be input to the control target is provided as the initial solution. However, by providing a random value as the initial solution, the number of searches for solution candidates increases, so that the calculation time increases.

In view of the above difficulties, the present inventor has invented an optimal solution calculation device that reduces the number of searches and shortens the calculation time compared to the conventional device.

In order to achieve the object described above, the present disclosure employs the following measures. It is to be noted that the scope of the claims and the reference numerals in parentheses described in this section indicate the correspondence with the specific means described in the embodiments described later as one embodiment and limit the technical scope of the invention It is not something to do.

A optimal solution calculation device according to the present disclosure is an optimal solution calculation device (1) that repeatedly calculates an optimal solution that minimizes an evaluation function having a time-varying parameter at regular intervals.

The optimal solution calculation device includes: an initial solution generation unit (11) that generates an initial solution for providing an initial value for a search process to search for the optimal solution; and an optimal solution search unit (12) that calculates the optimal solution through the search process using the initial solution. The initial solution generation unit (11) generates the initial solution using a previous optimal solution calculated by the optimal solution search unit (12).

Rather than assigning an initial solution using random numbers between the upper limit and the lower limit of the evaluation function as in the conventional technique, the number of searches can be reduced and the calculation time can be shortened by generating an initial solution using a previous optimal solution as in the present disclosure.

In one embodiment of the optimal solution calculation device, the optimal solution search unit (12) assigns a solution candidate to each processor element, and executes, in parallel for each processor element, a process of repeating the search process using the assigned solution candidate a predetermined number of times.

By performing the parallel processing in this manner, the calculation time can be shortened.

In one embodiment of the optimal solution calculation device, the search process crosses over the solution candidates, calculates an evaluation function of the crossover solution candidates, and executes a process of updating the solution candidate when the calculation value of the evaluation function is improved.

Although there are various methods for the search process, the method disclosed in this disclosure can be used.

In one embodiment of the optimal solution calculation device, the optimal solution search section (12) determines the number of repetitions of the search process using a calculation value of an evaluation function of the solution candidate.

In one embodiment of the optimal solution calculation device, the optimal solution search unit (12) determines the number of repetitions of the search process for a solution candidate having a small calculation value of the evaluation function to be greater than the number of repetitions of the search process for a solution candidate having a large calculation value of the evaluation function.

In this way, by increasing the number of calculations of the evaluation function of a solution candidate having a better calculation value of the evaluation function, the convergence speed can be increased, the number of searches can be reduced, and the calculation time can be shortened. In an evaluation of the algorithm by the inventor, the effect was found that the calculation time was shortened by 20 to 30 percent compared to the case where the evaluation function was calculated equally for each solution candidate.

The present disclosure may also provide a control system including any one of the above-described optimal solution calculation devices.

By using the optimal solution calculation device of the present disclosure, in a search-based method for solving an optimization problem of an evaluation function in model predictive control, the number of searches can be reduced and the calculation time can be made shorter than in the conventional technique.

BRIEF DESCRIPTION OF DRAWINGS

FIG. 1 is a block diagram showing an example of the configuration of an optimal solution calculation device according to an embodiment of the present disclosure.
FIG. 2 is a diagram showing an example of a graph of a control input X and an output Y in model predictive control.
FIG. 3 is a diagram showing a process in an initial solution generation unit according to the embodiment.
FIG. 4 is a block diagram showing an example of a control device including an optimal solution calculation device according to the present embodiment.
FIG. 5 is a flowchart showing an example of the overall process of the optimal solution calculation device according to the present embodiment.
FIG. 6 is a flowchart showing an example of a processing of a search process of the optimal solution calculation device according to the present embodiment.
FIG. 7 is a flowchart showing an example of a processing of a parallel process in the search process of the optimal solution calculation device of the present embodiment.
FIG. 8 is a flowchart showing another example of a processing of a parallel process in the search process of the optimal solution calculation device of the present embodiment.

EMBODIMENTS FOR CARRYING OUT INVENTION

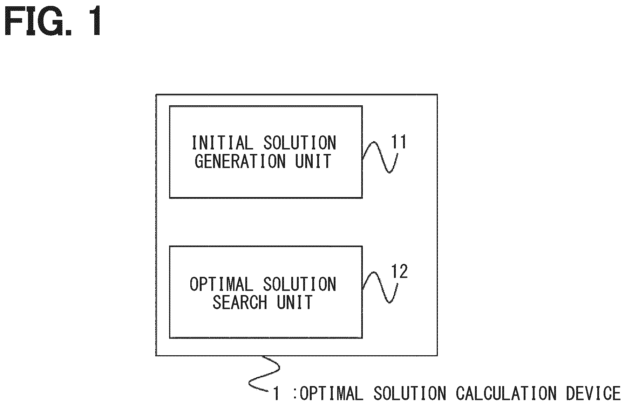

An example of the configuration of an optimal solution calculation device 1 according to this embodiment is schematically shown in the block diagram of FIG. 1. The optimal solution calculation device 1 of this embodiment is a device that repeatedly calculates an optimal solution that minimizes an evaluation function having a time-varying parameter at regular intervals. The optimal solution calculation device 1 includes an initial solution generation unit 11 and an optimal solution search unit 12.

The initial solution generation unit 11 generates an initial solution, which serves as an initial value to be used in the search process for the optimal solution in the optimal solution search unit 12 described later, by using an optimal solution in the previous cycle, preferably the optimal solution in the immediately preceding cycle. That is, the initial solution generation unit 11 generates an initial solution, which serves as an initial value to be used in the search process for the present optimal solution, by receiving an input of an optimal solution calculated by the optimal solution search unit 12 (described later), and using the received input of the optimal solution.

The optimal solution search unit 12 receives the initial solution generated by the initial solution generation unit 11 as an input of an initial value of an evaluation function, calculates an optimal solution that minimizes the evaluation function, and outputs the optimal solution. Various methods can be used for the calculation process of the optimal solution in the optimal solution search unit 12, for example, the ABC algorithm (i.e., Artificial Bee Colony Optimization Algorithm) can be used. Other algorithms such as the GA algorithm (i.e., Genetic Algorithm) and the PSO algorithm (i.e., Particle Swam Optimization Algorithm) can be used.

The optimal solution search unit 12 transmits the calculated optimal solution to the initial solution generation unit 11 as an input value of the initial solution in the next cycle, and causes the initial solution generation unit 11 to generate an initial solution in the next cycle.

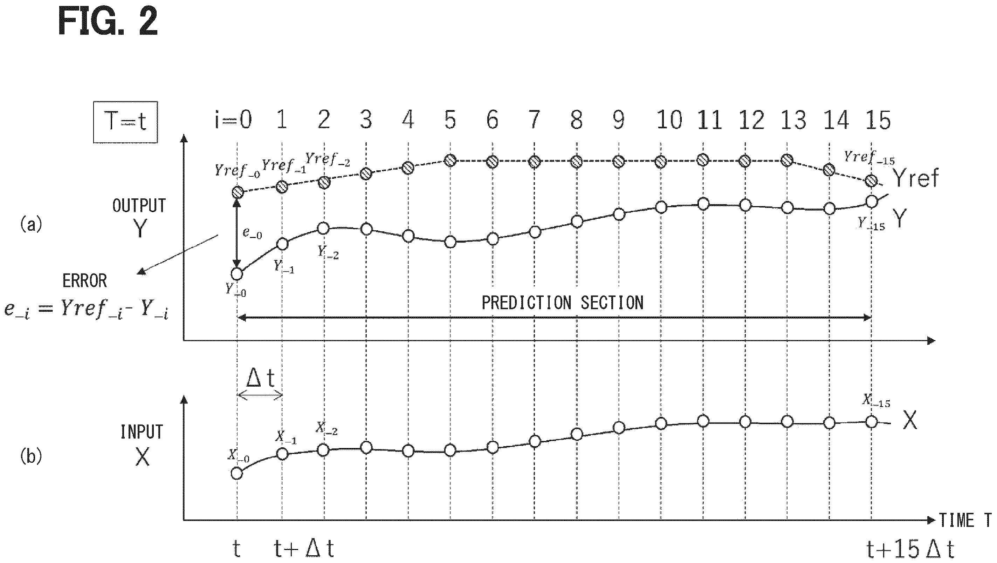

The process of the optimal solution calculation device 1 according to the present embodiment used in the model predictive control will now be described in more detail. Here, an evaluation function indicating a control objective in the model predictive control is defined as H, a control input that minimizes the evaluation function H is defined as X, and an output is defined as Y. FIG. 2 shows an example of a graph of the control input X and the output Y in the model predictive control. The control input X is an input value to a control target 3 such as a motor, and the output Y is an output value from the control target 3. (a) in FIG. 2 is a prediction graph showing the relationship between the output Y, the target output value Yref, and time T, in which the prediction section is 16 cycles. The number of cycles in the prediction section can be changed depending on the control target 3 and may be any number. (b) in FIG. 2 is a graph showing the relationship between the control input X and time T.

Here, as an example of prediction of the output Y, when the output Y is predicted using a difference equation, the output Y can be calculated by the following expression 1.

(Expression 1)

$$Y_{\_i+1} = Y_{\_i} + f(X_{\_i}), i = 0,1,2,\ldots,14$$

As an example, in the case of servo control in which the output Y is made to follow the target value Yref, the evaluation function H is expressed as the sum of the squared error with respect to the target value in the prediction section (t to t + 15Δt), and can be calculated using the following expression 2.

(Expression 2)

$$H = \sum_{i=0}^{15}(e_{\_i})^2$$
$$e_{\_i} = Yref_{\_i} - Y_{\_i}$$

When the optimal solution calculated by the optimal solution search unit 12 at time "T = t" is defined by an expression of "Xopt(t) = {Xopt_1(t), Xopt_1(t), ... , Xopt_15(t)}", the optimal solution Xopt(t+Δt) at the next time step "T = t+Δt" is predicted as the following expression 3.

(Expression 3)

$$Xopt_{\_i}(t + \Delta t) \approx Xopt_{\_i+1}(t)$$

Therefore, the initial solution generation unit 11 calculates the initial value of "Xinit(t+Δt) = {Xinit_0(t+Δt), Xinit_1(t+Δt), ... , Xinit_15(t+vt)}" for the optimal solution search using the following expression 4. Here, rand1 is random number in a range between -0.5 and 0.5, and rand2 is random number in a range between -0.5 and 0.5. Xll is the lower limit of X, and Xul is the upper limit of X.

(Expression 4)

$$Xinit_i(t + \Delta t) = Xopt_{i+1}(t) + rand1 \cdot \Delta X, i = 0,1,..,14$$

$$Xopt_{15}(t) = Xll + (Xul - Xll) \cdot rand2$$

The optimal solution search unit 12 calculates an expression of "Xopt(t+Δt) = {Xopt_0(t+vt), Xopt_1(t+Δt), ... , Xopt_15(t+Δt)}" that minimizes the evaluation function H using the initial solution Xinit(t+Δt) calculated by the initial solution generation unit 1, and outputs the leading element Xopt_0(t+Δt) as an output value.

The initial solution generation unit 11 and the optimal solution search unit 12 repeatedly execute the above-described processes while shifting the prediction section by Δt every control period Δt.

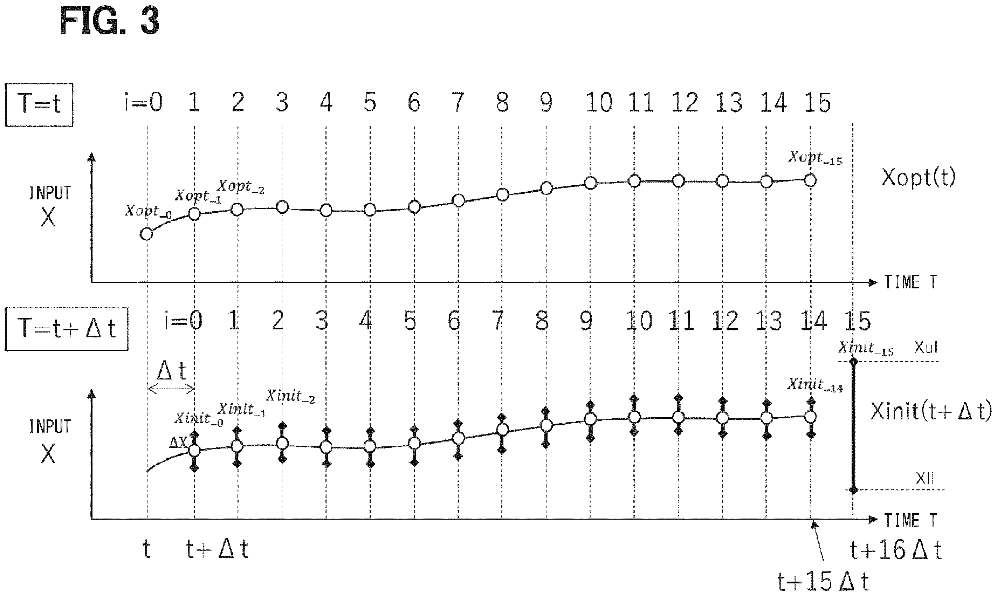

The above process is shown diagrammatically in FIG. 3.

Here, in the initial processing where no optimal solution exists in the optimal solution search unit 12, the initial solution generation unit 11 may generate, as the initial solution, a random value in the range between the upper limit value and the lower limit value of the calculation value of the evaluation function to be input to the control target 3, as in the conventional manner.

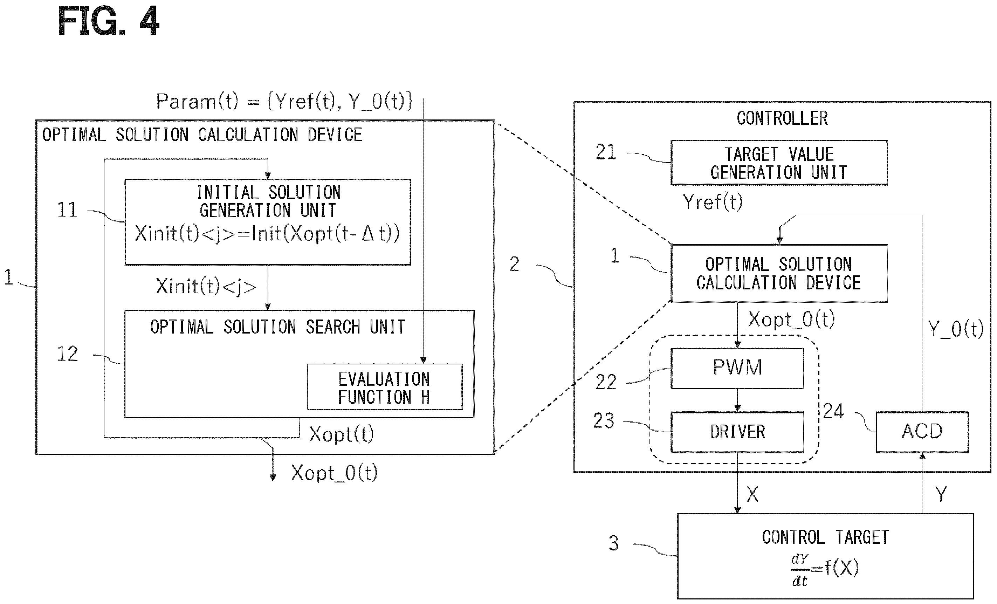

Next, a process in a control system using the optimal solution calculation device 1 of this embodiment will be described. In the following, a case where the control system controls the rotation speed of a motor will be described. A block diagram of the overall configuration of the control system in this case is shown in FIG. 4.

In the block diagram of FIG. 4, the control system has a controller 2 and a motor which is a control target 3, and the optimal solution calculation device 1 of this embodiment is provided in the controller 2. The controller 2 controls the control target 3, and includes a target value generation unit 21, an optimal solution calculation device 1, a PWM 22, a driver 23, and an ACD 24.

The target value generation unit 21 generates a target value Yref(t) of the output value of the motor, which is the control target 3. In the case of controlling the rotation speed of a motor, the target value Yref(t) is the target rotation speed of the motor.

The optimal solution calculation device 1 has an initial solution generation unit 11 and an optimal solution searching section unit 12, similar to the above.

The initial solution generation unit 11 generates an initial value Xinit(t)<j> using the previous optimal solution in the optimal solution search unit 12 , and transmits the generated initial value Xinit(t)<j> to the optimal solution search unit 12. Here, j is a solution candidate index to be used in the processing of the optimal solution search unit 12, which will be described later.

The optimal solution search unit 12 receives the initial value Xinit(t)<j> generated by the initial solution generation unit 11 as an input of the initial value of the evaluation function H(X), and executes a process of searching for an optimal solution. The optimal solution search unit 12 inputs the initial value Xinit(t)<j> as well as a time-varying parameter "Param(t) = {Yref(t), Y_0(t)}"to the evaluation function H(X) and executes a process of searching for an optimal solution. The optimal solution search unit 12 calculates an optimal solution Xopt(t) and transmits the optimal solution Xopt(t) to the initial solution generation unit 11 as an input value for generating an initial value Xinit(t+Δt)<j> in the next control period (t+Δt). Here, the first element of the optimal solution Xopt(t), that is, Xopt_0(t), is output as the output value of the optimal solution search unit 12.

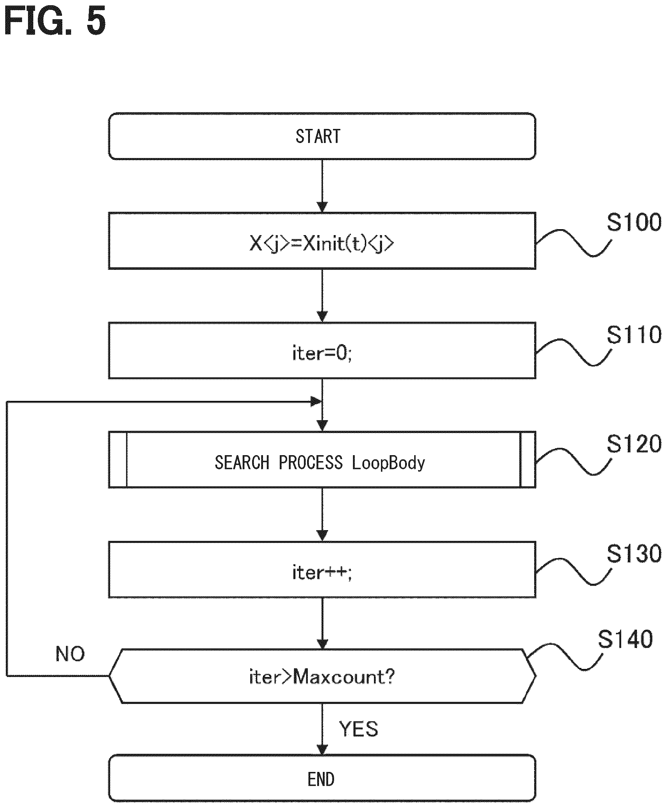

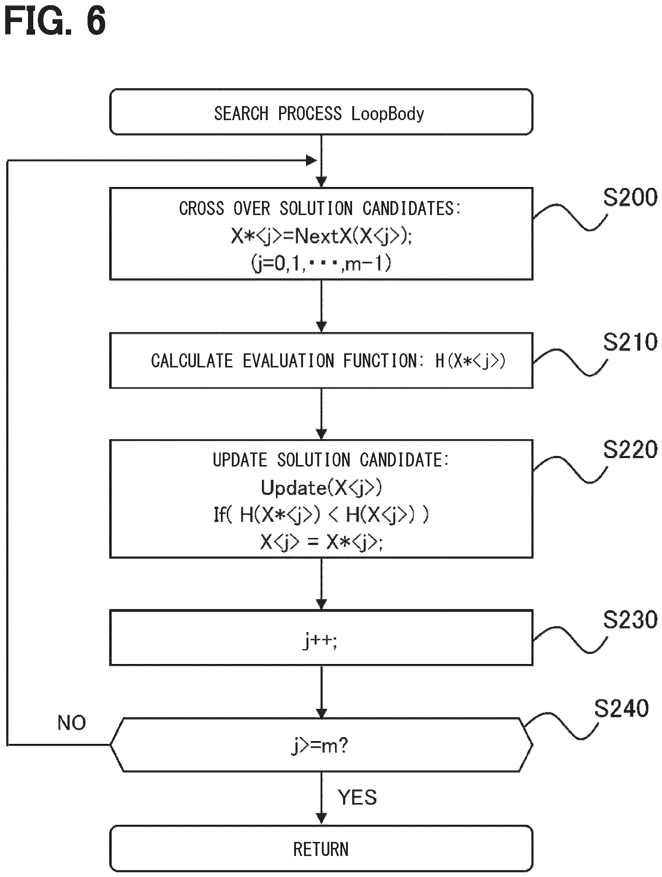

When periodically solving an optimization problem in the model predictive control, the optimal solution search unit 12 can speed up the processing by performing parallel processing of the search for multiple solution candidates X<j> using multiple processor elements. A known method can be used for the parallel processing. The process for this case is shown in the flowcharts of FIGS. 5 to 7. Although the parallel processing is shown to be performed by four processor elements PEG to PE3, the number of processor elements is not limited to four and may be any number equal to or greater than two. For the parallel processing in the optimal solution search unit 12, the publicly known technique shown in Non-Patent Literature 1 can also be used.

The optimal solution searching unit 12 calculates Xopt(t) that minimizes the evaluation function H(X). When the evaluation function H(X) is nonlinear, it is common to calculate a solution by a search-based method. Therefore, in the following explanation, the optimal solution search unit 12 also uses a search-based method. In the search-based method, an evaluation function value H(X_j) (here, j = 0, 1, 2, . . . , m-1) is calculated based on m solution candidates X<j> (here, j = 0, 1, 2, ..., m-1) to execute a process of searching for a solution.

The optimal solution search unit 12 substitutes the initial solution Xinit(t)<j> generated by the initial solution generation unit 11 as an initial value of the solution candidate X<j> (at S100). Then, the search loop index iter is initialized (i.e., "variable iter = 0) (at S110). The search loop index iter is the number of times the search process LoopBody has been repeated, and a predetermined number Maxcount is set as the maximum value.

Then, the optimal solution search unit 12 executes the search process LoopBody (at S120).

In the search process LoopBody, first, a crossover process of solution candidates is performed (at S200). In the process of the crossover for the solution candidates, for example, the index I1 of the solution candidates to be crossed over and the element I2 to be crossed over are randomly determined.

When the solutions are not crossed over, the expression of "X*_i<j> = X_i < j >" where "i ≠ I2" and "j ≠ I1" is calculated.

When the solutions are crossed over, the expression of "X*_I2<j> = X_I2<j> + (X_I2<I1> - X_I2<j>) x rand" where "0 ≤ rand ≤ 1" is calculated.

The process of crossover for solution candidates is not limited to the above, and other methods can also be used.

An evaluation function H is calculated using the solution candidates crossed over in S200 (at S210). For example, when the solutions are crossed over, the evaluation function H(X*_I2<j>) is calculated.

When the value H(X*<j>) of the evaluation function H of the crossed-over solution candidate is smaller than the value H(X<j>) of the evaluation function H of the solution candidate before crossing over, the calculation value is defined to be improved, and the solution candidate X<j> is updated using the crossed-over solution candidate X*<j> (at S220). Then, the solution candidate index j is incremented (at S230).

The processes from S200 to S230 are repeated until the process of crossing over and updating the solution candidates is completed for all the solution candidates (at S240).

When the process of crossing over and updating the solution candidates is completed for all the solution candidates, the processing of the search process LoopBody is terminated, and the search loop index iter is incremented (at S130).

Then, the processes of S120 and S130 are repeated until the repetition number of times of the search process LoopBody reaches a predetermined number of times Maxcount (at S140).

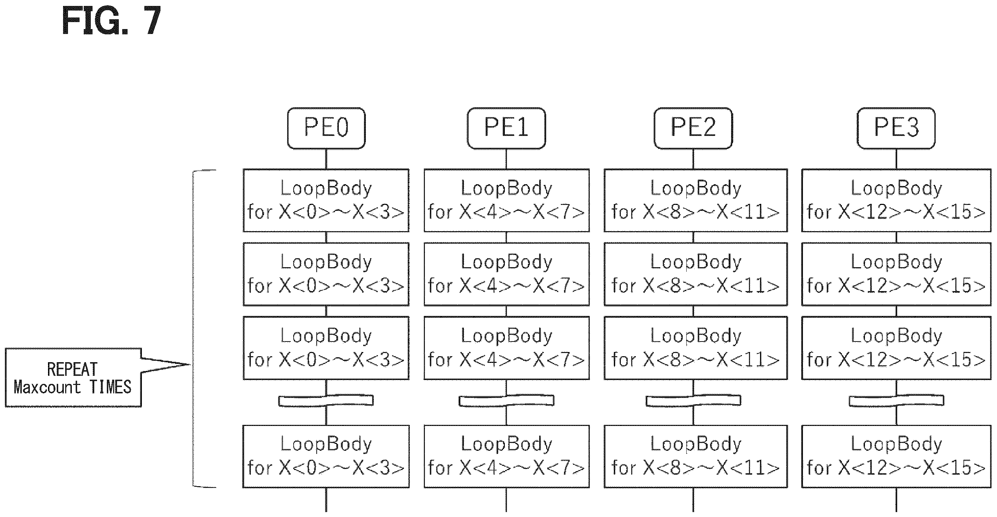

As shown in FIG. 7, the optimal solution search unit 12 executes the parallel processing using a plurality of processor elements PE0 to PE3 when executing the search process LoopBody. The processor elements PE0 to PE3 are each assigned four solution candidates X<j> equally and cause them to execute the search process LoopBody. For example, the solution candidates X<0> to X<3> are assigned to the processor element PE0, the solution candidates X<4> to X<7> are assigned to the processor element PE1, the solution candidates X<8> to X<11> are assigned to the processor element PE2, and the solution candidates X<12> to X<15> are assigned to the processor element PE3, and each processor element is caused to execute the search process LoopBody.

By executing the above-described processing, the optimal solution search unit 12 calculates the optimal solution Xopt(t) that minimizes the evaluation function H(X), and outputs the first element thereof, Xopt_0(t), as the output value of the optimal solution search unit 12.

PWM (i.e., Pulse Width Modulation) 22 is a control circuit that converts into a driver switching pulse based on the value Xopt_0(t) output by the optimal solution search unit 12.

The driver 23 converts the driver switching pulse converted by the PWM 22 into a current, inputs a control input X, and drives a motor which is the control target 3.

The ACD 24 is a control circuit that converts the output Y from the motor as the control target 3, that is, the number of rotations of the motor, into a digital value, and outputs an output value Y_0(t). The ACD 24 feeds back the output value Y_0(t) as an input value of the evaluation function H in the optimal solution calculation device 1.

The control system has the above-described configuration and controls the motor, which is the control target 3.

The processing in the control system will be described. First, the control system transmits the target value Yref(t) generated by the target value generation unit 21 to the optimal solution search unit 12 of the optimal solution calculation device 1 . Furthermore, the initial solution generation unit 11 generates an initial solution Xinit(t)<j> to be used in the processing of the optimal solution search unit 12 by using the previous, preferably immediately preceding, optimal solution Xopt(t-1).

Then, the optimal solution search unit 12 substitutes the initial solution Xinit(t)<j> generated by the initial solution generation unit 11, the target value Yref(t) generated by the target value generation unit 21, and the previous output Y_0(t-1) into the evaluation function H, and performs a search process for the optimal solution Xopt(t) that minimizes the evaluation function H. Then, the first element Xopt_0(t) of the calculated optimal solution Xopt(t) is output as an output value. Furthermore, the optimal solution search unit 12 transmits the optimal solution Xopt(t) to the initial solution generation unit 11 so that the initial solution generation unit 11 can generate the next initial solution.

The Xopt_0(t) output from the optimal solution calculation device 1 is converted into a driver switching pulse by the PWM 22, then, the driver switching pulse is input to the motor, which is the control target 3, as a control input X by the driver 23 to drive the motor. Then, the ACD 24 digitally converts the output Y from the motor as the control target 3, which is the motor rotation speed, outputs an output value Y_0(t), and inputs as the next input value to the optimal solution search unit 12 in the optimal solution calculation device 1.

By repeating the above process, the motor, which is the control target 3, can be controlled.

The optimal solution calculation device 1 of this embodiment uses each optimal solution in the prediction section calculated at time t to calculate an initial value when calculating each optimal solution in the prediction section at time t+Δt (see FIG. 3 ), thereby making it possible to shorten the calculation time by using an appropriate initial value.

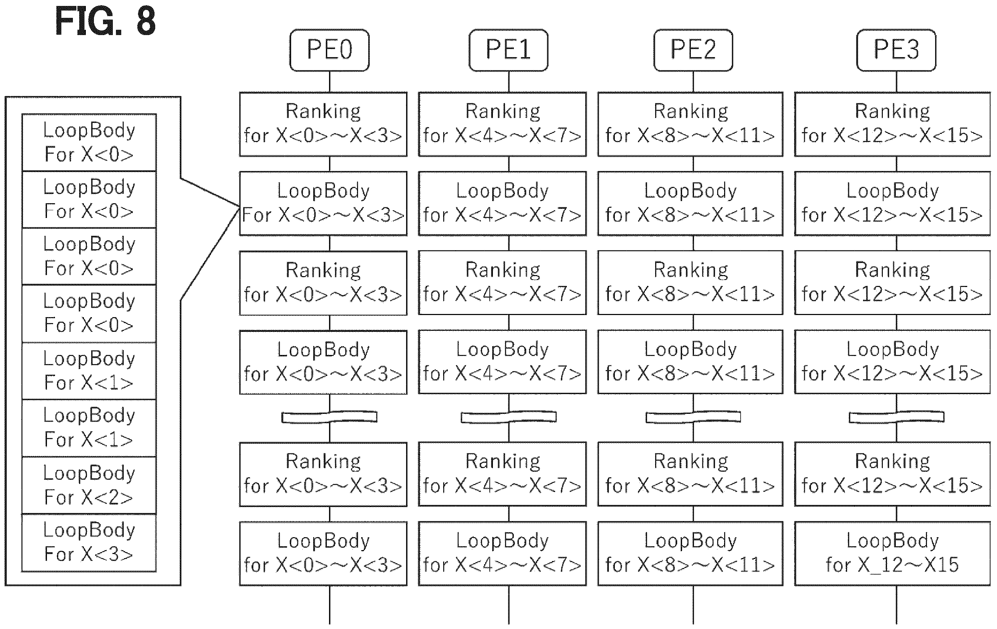

The optimal solution search unit 12 may execute processing so as to improve the convergence speed when performing the parallel processing in the processor elements PE. The process in this case is shown diagrammatically in FIG. 8.

In the parallel processing of FIG. 7 described above, the search process LoopBody for all solution candidates is processed equally in the processing for the solution candidates in each of the processor elements PE0 to PE3.Each of the processor elements PE0 to PE3 may be configured to rank the solution candidates X<j> according to the value of the evaluation function H, and to execute more search processes LoopBody for the higher ranked solution candidates than for the lower ranked solution candidates. The ranking can be performed by sorting the solution candidates in ascending order of the value of the evaluation function H for each solution candidate X<j>, alternatively, other methods may also be used for ranking.

For example, in the processor element PE0, when the values H(X<0>) to H(X<3>) of the evaluation function H for the solution candidates X<0> to X<3> are sorted in ascending order, the top solution candidates are X<0>, X<1>, X<2>, and X<3>, respectively. In this case, the number of times the search process LoopBody is executed is set so as to increase the number of upper ranked solution candidates and decrease the number of lower ranked solution candidates. As shown in FIG. 8, the search process LoopBody may be executed such that the first ranked solution candidate X<0> is processed four times, the second ranked solution candidate X<1> is processed twice, the third ranked solution candidate X<2> is processed once, and the fourth ranked solution candidate X<3> is processed once. In this case, it may be preferable to execute the search process LoopBody without excluding solution candidates with lower rankings. With this configuration, an optimal solution can be acquired in a short time using the top-ranked solution candidates, and by also performing the search process for lower-ranked solution candidates, the risk of falling into a local solution can be reduced. In this way, the limited resources of the processor elements PE can be allocated efficiently. The number of times the search process LoopBody is executed is not limited to the above described times, and the number of times is sufficient that the upper ranked solution candidates are executed more frequently than the lower ranked solution candidates.

In the above description, the control target 3 is the rotation speed of the motor. However, the control target 3 is not limited to the rotation speed of the motor, and the control target 3 can be applied to various types of control targets 3.

In addition, each value and each evaluation function in this embodiment may be a vector in addition to a scalar.

The optimal solution calculation device of the present disclosure is not limited to the scope described in this specification, and can be arbitrarily modified within the scope of its technical concept. Furthermore, the order of each process may be changed as desired within the scope of the technical concept.

(Industrial applicability)

By using the optimal solution calculation device of the present disclosure, in a method for periodically solving an optimization problem of an evaluation function in the model predictive control, the number of searches can be reduced and the calculation time can be made shorter than in the conventional technique.

**Claims**

1. An optimal solution calculation device for repeatedly calculating an optimal solution that minimizes an evaluation function having a time-varying parameter at regular intervals, the optimal solution calculation device comprising:

   an initial solution generation unit that generates an initial solution for providing an initial value for a search process to search for the optimal solution; and
   an optimal solution search unit that calculates the optimal solution through the search process using the initial solution, wherein:
   the initial solution generation unit generates the initial solution using a previous optimal solution calculated by the optimal solution search unit.

2. The optimal solution calculation device according to claim 1, wherein:

   the optimal solution search unit assigns a solution candidate to each processor element; and
   the optimal solution search unit executes a process of repeating the search process using an assigned solution candidate a predetermined number of times in parallel for each processor element.

3. The optimal solution calculation device according to claim 2, wherein:
   the search process includes: crossing over solution candidates, calculating an evaluation function of crossed over solution candidate, and executing a process of updating the solution candidate when a calculation value of the evaluation function is improved.

4. The optimal solution calculation device according to claim 2 or 3, wherein:
the optimal solution search unit determines a numerical number of repetitions of the search process using a calculation value of the evaluation function for the solution candidate.

5. The optimal solution calculation device according to claim 2 or 3, wherein:
the optimal solution search unit determines a numerical number of repetitions of the search process for a solution candidate having a smaller calculation value of the evaluation function to be larger than a numerical number of repetitions of the search process for a solution candidate having a larger calculation value of the evaluation function.

6. A control system comprising:
the optimal solution calculation device according to any one of claims 1 to 5.

# FIG. 1

```
┌─────────────────────────────────────────┐
│  ┌───────────────────────┐               │
│  │   INITIAL SOLUTION     │      11       │
│  │   GENERATION UNIT      │ ∿  )          │
│  └───────────────────────┘               │
│                                          │
│  ┌───────────────────────┐               │
│  │   OPTIMAL SOLUTION     │      12       │
│  │   SEARCH UNIT          │ ∿  )          │
│  └───────────────────────┘               │
└─────────────────────────────────────────┘
        1 :OPTIMAL SOLUTION CALCULATION DEVICE
```

# FIG. 2

(a) 
$T=t$

OUTPUT Y

ERROR
$$e_{-i} = Yref_{-i} - Y_{-i}$$

$i=0$ 1 2 3 4 5 6 7 8 9 10 11 12 13 14 15

$Yref_{-0}$ $Yref_{-1}$ $Yref_{-2}$ ... $Yref_{-15}$ Yref

$e_{-0}$

$Y_{-0}$ $Y_{-1}$ $Y_{-2}$ ... $Y_{-15}$ Y

PREDICTION SECTION

(b)

INPUT X

$\Delta t$

$X_{-0}$ $X_{-1}$ $X_{-2}$ ... $X_{-15}$ X

TIME T

t  t+$\Delta t$   t+15$\Delta t$

EP 4 468 216 A1

# FIG. 3

$T=t$

$i=0$ 1 2 3 4 5 6 7 8 9 10 11 12 13 14 15

INPUT X

$Xopt_{-0}$ $Xopt_{-1}$ $Xopt_{-2}$ $Xopt_{-15}$

$Xopt(t)$

TIME T

$T=t+\Delta t$

$i=0$ 1 2 3 4 5 6 7 8 9 10 11 12 13 14 15

$\Delta t$

INPUT X

$\Delta X$ $Xinit_{-0}$ $Xinit_{-1}$ $Xinit_{-2}$ $Xinit_{-14}$ $Xinit_{-15}$ Xul

$Xinit(t+\Delta t)$

Xll

TIME T

t    $t+\Delta t$    $t+16\Delta t$

$t+15\Delta t$

EP 4 468 216 A1

# FIG. 4

Param(t) = {Yref(t), Y_0(t)}

**CONTROLLER**

TARGET VALUE GENERATION UNIT — 21

Yref(t)

OPTIMAL SOLUTION CALCULATION DEVICE — 1

Xopt_0(t)

PWM — 22

DRIVER — 23

ACD — 24

Y_0(t)

Y

X

2

**CONTROL TARGET**

$\dfrac{dY}{dt} = f(X)$

3

**OPTIMAL SOLUTION CALCULATION DEVICE**

INITIAL SOLUTION GENERATION UNIT

Xinit(t)<j>=Init(Xopt(t−Δt)) — 11

Xinit(t)<j>

OPTIMAL SOLUTION SEARCH UNIT — 12

EVALUATION FUNCTION H

Xopt(t)

Xopt_0(t)

1

# FIG. 5

```
                    ┌─────────────────────────────┐
                    │            START            │
                    └─────────────────────────────┘
                                  │
                                  ▼
                    ┌─────────────────────────────┐        S100
                    │      X<j>=Xinit(t)<j>        │
                    └─────────────────────────────┘
                                  │
                                  ▼
                    ┌─────────────────────────────┐        S110
                    │           iter=0;           │
                    └─────────────────────────────┘
                                  │
                                  ▼
                    ┌─┬─────────────────────────┬─┐        S120
                    │ │  SEARCH PROCESS LoopBody │ │
                    └─┴─────────────────────────┴─┘
                                  │
                                  ▼
                    ┌─────────────────────────────┐        S130
                    │           iter++;           │
                    └─────────────────────────────┘
                                  │
                                  ▼
            NO      ╱─────────────────────────────╲        S140
          ◄─────────     iter>Maxcount?           │
                    ╲─────────────────────────────╱
                                  │ YES
                                  ▼
                    ┌─────────────────────────────┐
                    │            END              │
                    └─────────────────────────────┘
```

# FIG. 6

```
┌─────────────────────────────────────────┐
│        SEARCH PROCESS LoopBody           │
└─────────────────────────────────────────┘
                     │
   ┌─────────────────▼─────────────────────┐
   │   CROSS OVER SOLUTION CANDIDATES:      │    S200
   │        X*<j>=NextX(X<j>);              │
   │        (j=0,1,···,m−1)                 │
   └─────────────────┬─────────────────────┘
                     │
   ┌─────────────────▼─────────────────────┐
   │  CALCULATE EVALUATION FUNCTION: H(X*<j>) │  S210
   └─────────────────┬─────────────────────┘
                     │
   ┌─────────────────▼─────────────────────┐
   │      UPDATE SOLUTION CANDIDATE:        │    S220
   │           Update(X<j>)                 │
   │      If( H(X*<j>) < H(X<j>) )          │
   │          X<j> = X*<j>;                 │
   └─────────────────┬─────────────────────┘
                     │
   ┌─────────────────▼─────────────────────┐
   │                j++;                    │    S230
   └─────────────────┬─────────────────────┘
                     │
 NO   ┌──────────────▼─────────────────────┐   S240
◄─────┤              j>=m?                  │
      └──────────────┬─────────────────────┘
                     │ YES
   ┌─────────────────▼─────────────────────┐
   │               RETURN                   │
   └───────────────────────────────────────┘
```

# FIG. 7

| PE0 | PE1 | PE2 | PE3 |
|---|---|---|---|
| LoopBody for X<0>～X<3> | LoopBody for X<4>～X<7> | LoopBody for X<8>～X<11> | LoopBody for X<12>～X<15> |
| LoopBody for X<0>～X<3> | LoopBody for X<4>～X<7> | LoopBody for X<8>～X<11> | LoopBody for X<12>～X<15> |
| LoopBody for X<0>～X<3> | LoopBody for X<4>～X<7> | LoopBody for X<8>～X<11> | LoopBody for X<12>～X<15> |
| LoopBody for X<0>～X<3> | LoopBody for X<4>～X<7> | LoopBody for X<8>～X<11> | LoopBody for X<12>～X<15> |

REPEAT
Maxcount TIMES

EP 4 468 216 A1

# FIG. 8

EP 4 468 216 A1

## INTERNATIONAL SEARCH REPORT

| International application No. |
|---|
| **PCT/JP2022/048436** |

| A. | CLASSIFICATION OF SUBJECT MATTER |
|---|---|

*G06N 99/00*(2019.01)i; *G05B 13/02*(2006.01)i; *G05B 13/04*(2006.01)i
FI:   G06N99/00 180; G05B13/04; G05B13/02 J

According to International Patent Classification (IPC) or to both national classification and IPC

| B. | FIELDS SEARCHED |
|---|---|

Minimum documentation searched (classification system followed by classification symbols)

G06N99/00; G05B13/02; G05B13/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2020-8889 A (HITACHI AUTOMOTIVE SYSTEMS LTD) 16 January 2020 (2020-01-16) paragraphs [0015]-[0061] | 1-3, 6 |
| A | paragraphs [0015]-[0061] | 4-5 |
| Y | 広津鉄平ほか, 市街地での自動運転に向けた車両運動制御アルゴリズムと組込みＥＣＵでの実装, 電子情報通信学会技術研究報告, 17 March 2016, vol. 115, no. 519, pp. 1-5 p. 2, left column, line 21 to right column, line 2, (HIROTSU, Teppei et al. Efficient Implementation of Non-Linear Model Predictive Control on an Embedded ECU for Automated Driving in Urban Environments. IEICE technical report.) | 1-3, 6 |
| Y | JP 2002-358201 A (HITACHI ENG CO LTD) 13 December 2002 (2002-12-13) paragraphs [0024]-[0027] | 2-3 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 February 2023** | **20 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/048436**

| Patent document cited in search report | | | Publication date (day/month/year) | Patent family member(s) | | | Publication date (day/month/year) |
|---|---|---|---|---|---|---|---|
| JP | 2020-8889 | A | 16 January 2020 | US 2021/0221402 A1 paragraphs [0029]-[0080] CN 112292717 A | | | |
| JP | 2002-358201 | A | 13 December 2002 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2022004778 A

**Non-patent literature cited in the description**

• **TEPPEI HIROTSU** ; **ATSUSHI YOKOYAMA**. Vehicle Motion Control Algorithm for Autonomous Driving in Urban Areas and Its Implementation on Embedded ECUs. *Institute of Electronics, Information and Communication Engineers Techniques*, 24 March 2016, vol. 115 (518), 1-5